# FASCICULE DE BREVET EUROPEEN

(11) **EP 2 651 700 B1**
(45) Date de publication et mention de la délivrance du brevet: **22.10.2014**
(21) Numéro de dépôt: 11796748.9
(22) Date de dépôt: 16.11.2011
(51) Int. Cl.: B60R 21/34, B62D 25/08, B62D 25/10

(54) **PARTIE AVANT DE VEHICULE, EN PARTICULIER UN VEHICULE AUTOMOBILE, A SECURITE AMELIOREE EN CAS DE CHOC PIETON**
VORDERTEIL EINES FAHRZEUGES, INSBESONDERE EINES KRAFTFAHRZEUGES, MIT VERBESSERTER SICHERHEIT IM FALLE EINES FUSSGÄNGER-AUFPRALLS
FRONT PART OF A VEHICLE, SUCH AS A MOTOR VEHICLE, OF IMPROVED SAFETY IN THE EVENT OF PEDESTRIAN SHOCK

(30) Priorité: 16.12.2010 FR 1060595
(43) Date de publication de la demande: 23.10.2013
(73) Titulaire: Peugeot Citroën Automobiles SA, 78140 Vélizy Villacoublay (FR)
(72) Inventeur: BENANE, Said, F-94550 Chevilly Larue (FR)
(74) Mandataire: Fosse, Danièle
(86) Numéro de dépôt international: PCT/FR2011/052647
(87) Numéro de publication internationale: WO 2012/080602

(56) Documents cités:
- DE-A1-102004 046 419
- FR-A1- 2 928 335
- US-B2- 7 357 446

## Description

La présente invention concerne une partie avant de véhicule, tel qu'un véhicule automobile, permettant d'améliorer la sécurité des piétons en cas de choc à l'avant du véhicule.

De nombreux dispositifs ont déjà été proposés pour diminuer les risques de blessures en cas de choc piéton sur le capot avant du véhicule.

Ainsi, le brevet US 7 357 446 décrit une partie avant de véhicule automobile comprenant un capot avant à doublure interne monté entre le pare-choc avant et le pare-brise du véhicule et une grille d'auvent transversale montée entre le pare-brise et le capot avant en ayant une partie avant disposée sous une partie arrière du capot avant quand ce dernier est en position de fermeture du compartiment moteur du véhicule.

Le capot avant et sa doublure interne ainsi que la grille d'auvent sont aptes à se déformer lorsque la tête d'un piéton heurte la partie arrière du capot avant afin d'absorber le choc résultant.

Cependant, l'enfoncement de la tête du piéton dans le capot et la doublure interne s'effectue rapidement de manière non contrôlée et la tête risque de contacter un point dur situé au-dessous de la doublure interne et le capot et constitué par la liaison du bord avant de la grille d'auvent au bord avant d'une paroi du collecteur d'auvent, pouvant alors occasionner de graves blessures à la tête du piéton. Le document DE 102004046419 est considéré l'état plus proche de la revendication 1.

La présente invention a pour but de proposer une partie avant de véhicule qui évite l'inconvénient ci-dessus de la partie avant connue de véhicule.

A cet effet, l'invention a pour objet une partie avant de véhicule, tel qu'un véhicule automobile, comprenant un capot avant à doublure interne monté entre le pare-chocs avant et le pare-brise du véhicule et une grille d'auvent transversale montée entre le pare-brise et le capot avant en ayant une partie avant disposée sous une partie arrière du capot avant quand ce dernier est en position fermée, le capot avant et sa doublure interne ainsi que la grille d'auvent étant apte à se déformer lors d'un choc piéton appliqué sur la partie arrière du capot avant afin d'absorber le choc, et qui est en ce que la grille d'auvent a sa partie avant disposée sous la doublure interne du capot avant et a son bord avant en appui sur un élément rigide de carrosserie du véhicule en un emplacement prédéterminé sous la doublure interne du capot avant relativement éloigné du bord arrière du capot avant de façon que, lors d'une première phase d'absorption du choc piéton, la partie arrière du capot se déforme pour provoquer l'écrasement de la doublure interne sur la partie avant de la grille d'auvent et en ce que la grille d'auvent, lors d'une seconde phase d'absorption du choc piéton, a sa partie avant apte à se déformer par enfoncement vers le bas de façon limitée avec écrasement complet de la doublure interne du capot avant, caractérisée en ce que la grille d'auvent comporte à sa face interne opposée à la doublure interne du capot avant un moyen formant butée disposé le long de la partie avant de la grille d'auvent et apte à venir en appui sur une partie de l'élément rigide de carrosserie du véhicule pour limiter la déformation de la partie avant de la grille d'auvent.

De préférence, le moyen formant butée est constitué de plusieurs nervures verticales parallèles à la direction longitudinale du véhicule.

De préférence, le bord avant de la grille d'auvent est en appui sur l'élément de carrosserie par plusieurs nervures verticales transversales à l'axe longitudinal du véhicule et solidaires de la grille d'auvent le long de son bord avant.

Avantageusement, la partie avant de la grille d'auvent comporte une paroi inclinée de bas en haut en partant de son bord avant et la doublure interne du capot avant comporte une paroi inclinée située en regard de la paroi inclinée de la grille d'auvent sensiblement parallèlement à celle-ci lorsque le capot avant est en position fermée, les deux parois inclinées venant en appui l'une sur l'autre lors du choc piéton.

L'angle d'inclinaison de la paroi de la grille d'auvent peut être compris entre environ 30° et environ 45°.

L'élément rigide de carrosserie est constitué par une paroi du collecteur d'auvent.

La partie arrière de la grille d'auvent comporte une paroi inclinée vers le bas fixée au bord inférieur du pare-brise et raccordée à la partie avant de la grille d'auvent par une paroi inclinée vers le haut.

De préférence, les nervures de limitation et d'appui viennent de matière avec la grille d'auvent qui peut être en une matière plastique.

L'invention vise également un véhicule automobile, caractérisé en ce qu'il comprend une partie avant telle que définie précédemment.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- la figure 1 est une vue en perspective de dessus de la partie avant à capot avant d'un véhicule automobile ;
- la figure 2 est une vue analogue à celle de la figure 1 sans la peau du capot avant ;
- la figure 3 est une vue en coupe dans le plan vertical du véhicule contenant l'axe III-III de la figure 1 et représentant une grille d'auvent conforme l'invention ;
- la figure 4 est une vue analogue à celle de la figure 3 et représentant un début de choc piéton dont la tête est sur le point d'être appliquée au capot avant du véhicule ;
- la figure 5 est une vue analogue à celle de la figure 4 et représentant une première phase d'absorption du choc piéton ; et
- la figure 6 est une vue analogue à celle de la figure 5 et représentant une seconde phase d'absorption et de limitation du choc piéton.

En se reportant aux figures, la référence 1 désigne une partie avant d'un véhicule automobile et qui comprend un capot avant 2 monté entre le pare-choc avant 3 et le pare-brise 4 du véhicule.

Le capot avant 2 occupe normalement une position de fermeture du compartiment moteur 5 du véhicule et comprend une peau externe 6 et une doublure interne 7 solidaire de la peau 6 en délimitant avec cette dernière un corps creux.

La partie avant du véhicule comprend en outre une grille d'auvent transversale 8 montée entre le pare-brise 4 et le capot avant 2 en prolongeant la partie inférieure de ce pare-brise. La grille d'auvent 8 s'étend sur toute la largueur du véhicule entre deux doublures d'ailes du véhicule et a notamment pour rôle de capter de l'air pour alimenter un système de climatisation de ce véhicule.

La grille d'auvent 8 est disposée au-dessus d'un collecteur d'auvent 9 destiné à collecter l'eau ruisselant du pare-brise 4, la grille d'auvent 8 et le collecteur d'auvent 9 formant l'auvent du véhicule.

La grille d'auvent 8 comporte une partie avant 8a disposée sous une partie arrière 2a du capot avant 2 quand ce dernier est en position fermée et une partie arrière 8b fixée de manière étanche au bord inférieur du pare-brise 4.

Par partie avant ou arrière d'un élément du véhicule, on entend celle qui se trouve vers l'avant ou vers l'arrière du véhicule.

Selon l'invention, la grille d'auvent 8 a sa partie avant 8a qui est disposée sous la doublure interne 7 du capot avant 2 et a son bord avant 8b qui est en appui sur une partie sensiblement horizontale avant 10a d'une paroi rigide inférieure 10 du collecteur d'auvent 9 par l'intermédiaire d'un moyen formant nervure sensiblement vertical 11.

Ce moyen formant nervure 11 est ainsi situé en un emplacement prédéterminé sous la doublure interne 7 du capot avant 2 relativement éloigné du bord arrière 2b de ce capot.

Avantageusement, le moyen formant nervure 11 comprend plusieurs nervures verticales espacées, transversales à l'axe longitudinal du véhicule et solidaires de la grille d'auvent 8 le long de son bord avant 8b.

La partie avant 8a de la grille d'auvent 8 comprend une paroi déformable 8c inclinée de bas en haut en partant de son bord avant 8b et la doublure interne 7 du capot avant 2 comporte une paroi inclinée 7a située en regard de la paroi inclinée 8c de la grille d'auvent 8 sensiblement parallèlement à celle-ci lorsque le capot avant 2 est en position fermée. A cette position, la paroi 7a de la doublure interne 7 est ainsi écartée d'une distance prédéterminée de la paroi inclinée 8c de la grille d'auvent 8.

L'angle d'inclinaison relativement à l'horizontale de la paroi 8c de la grille d'auvent 8 peut être compris entre environ 30° et environ 45°.

La partie arrière de la grille d'auvent 8 est constituée par une paroi 8d inclinée vers le bas à partir du bord inférieur du pare-brise 4 en étant située à l'extérieur du capot avant 2 occupant sa position fermée et qui est raccordée à la paroi 8c de la grille d'auvent 8 par l'intermédiaire d'une paroi inclinée vers le haut 8e située sensiblement à l'aplomb de l'extrémité 2b du capot avant 2. Le bord supérieur de la paroi 8d est fixé, par exemple par collage, au bord inférieur du pare-brise 4.

La paroi 8c de la partie avant 8a de la grille d'auvent 8 comprend un moyen de butée 12 permettant de limiter la déformation de la paroi 8c lors d'un choc piéton comme cela sera décrit ultérieurement.

Le moyen de butée 12 est solidaire de la face interne de la paroi 8c de la grille d'auvent 8 opposée à la paroi inclinée 7a de la doublure interne 7 et est disposé le long de la paroi 8c de façon à pouvoir venir en appui, lors d'un choc piéton, sur une partie rigide de la paroi 10 du collecteur d'auvent 9 située en arrière de la paroi 10a d'appui du moyen formant nervure 11 lorsque la paroi 8c est déformée par le choc piéton.

Avantageusement, le moyen de butée 12 comprend plusieurs nervures verticales parallèles à la direction longitudinale du véhicule et pouvant présenter une forme générale de triangle rectangle dont l'un des côtés peut venir en appui sur la partie correspondante de la paroi 10 du collecteur d'auvent 9 lors d'un choc piéton.

De préférence, les nervures d'appui 11 et les nervures de butée 12 viennent de matière avec la grille d'auvent 8 qui peut être réalisée en une matière plastique.

Les nervures d'appui 11 et les nervures de butée 12 peuvent être situées au niveau et en-dessous des axes des essuie-glaces 13 du véhicule.

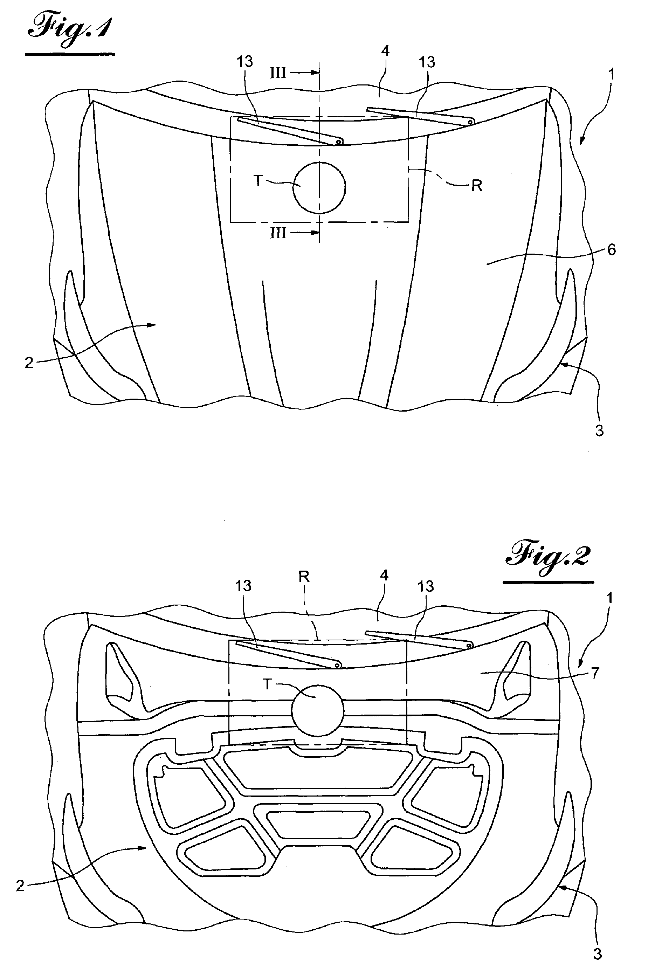

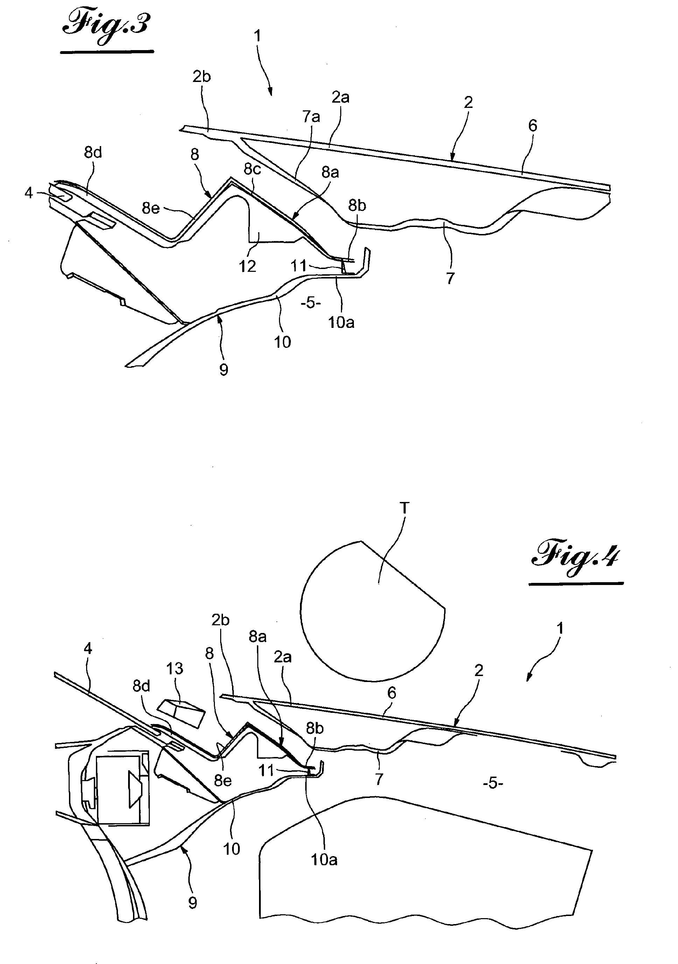

La figure 4 représente la situation d'un début de choc piéton où la tête T du piéton est sur le point de heurter la partie arrière 2a du capot avant 2 dans une zone d'impact symbolisée par le rectangle R aux figures 1 et 2, dans laquelle zone d'impact se trouvent le moyen formant nervure 11 et le moyen de butée 12.

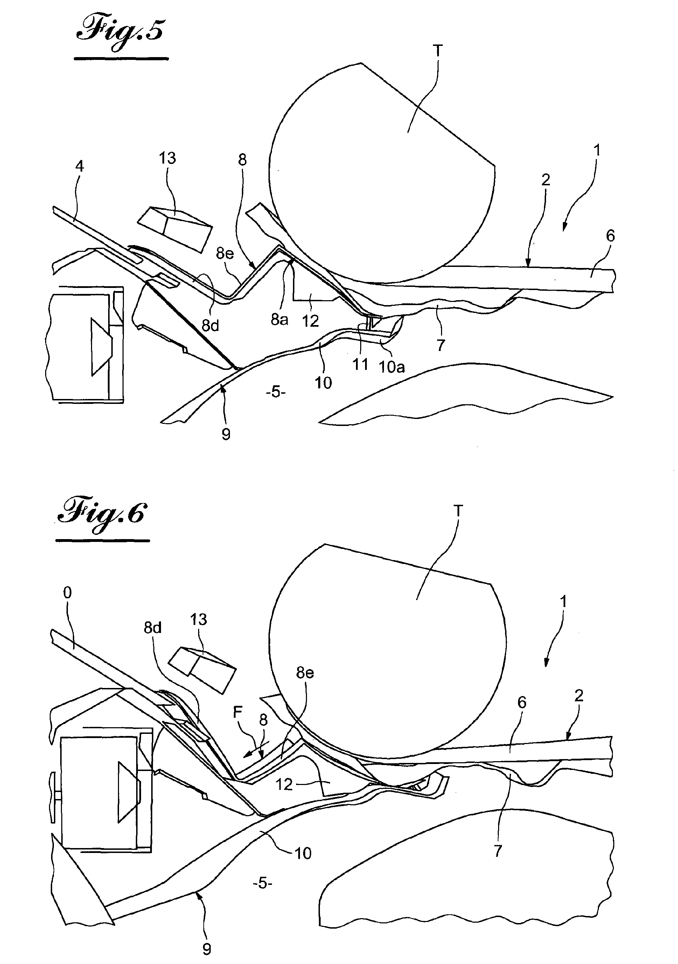

La figure 5 montre une première phase d'absorption du choc de la tête T du piéton pendant laquelle la partie arrière de la peau 6 du capot avant se déforme pour provoquer l'écrasement de la doublure interne 7 de ce capot sur la paroi 8c de la grille d'auvent 8. L'appui local du bord avant 8b de la paroi 8c par l'intermédiaire du moyen formant nervure 11 sur la partie avant 10a de la paroi 10 du collecteur d'auvent 9 assure un bon chargement de la grille d'auvent 8 par rapport à la doublure interne 7, de sorte que la paroi 8 ne se déforme pas lors de cette première phase d'absorption. Cette absence de déformation de la paroi 8c est également réalisée par l'absence de déformation de la paroi 8d de la partie arrière de la grille d'auvent 8 lors de cette première phase d'absorption. En prévoyant une paroi inclinée 8c de la grille d'auvent 8 d'une pente équivalente à celle de la paroi 7a de la doublure interne 7 du capot avant 2, on assure un bon couplage de ces deux parois tout au début du choc piéton pour contrôler efficacement la déformation par écrasement de la doublure interne 7 sur la paroi inclinée 8c de la grille d'auvent 8. On assure ainsi une première phase d'enfoncement de la tête T du piéton dans la partie arrière du capot avant avec un premier niveau d'absorption d'énergie du choc de la tête.

La figure 6 représente la seconde phase d'absorption du choc de la tête T du piéton en fin de choc pendant laquelle la paroi 8c de la grille d'auvent 8 s'est déformée vers le bas jusqu'à ce que le moyen de butée 12 soit en appui sur la partie correspondante de la paroi 10 du collecteur d'auvent 9 afin de limiter la déformation par enfoncement de la paroi 8c, avec écrasement complet de la doublure interne 7 du capot avant 2 sur la paroi déformée vers le bas 8c de la grille d'auvent 8. On assure ainsi un second niveau d'absorption d'énergie du choc de la tête T du piéton en limitant la descente ou l'enfoncement de la tête T avec la grille d'auvent 8 et le capot avant 2. En outre, lors de cette seconde phase, les efforts du choc sont dirigés vers le bas en dessous du pare-brise 4 comme symbolisé par la flèche F en figure 6 avec une légère déformation vers le bas de la paroi arrière 8d et de la paroi de liaison 8e de la grille d'auvent 8, évitant de la sorte à la tête T du piéton de heurter les balais d'essuie-glaces.

L'invention assure ainsi une bonne répartition d'absorption de l'énergie du choc de la tête du piéton sur la partie arrière du capot avant du véhicule et permet de diriger les efforts du choc de façon à éviter à la tête du piéton d'heurter les essuie-glaces et/ou leurs axes respectifs.

## Revendications

1. Partie avant (1) de véhicule, tel qu'un véhicule automobile, comprenant un capot avant (2) à doublure interne (7) monté entre le pare-chocs avant (3) et le pare-brise (4) du véhicule et une grille d'auvent transversale (8) montée entre le pare-brise (4) et le capot avant (2) en ayant une partie avant (8a) disposée sous une partie arrière (2a) du capot avant (2) quand ce dernier est en position fermée, le capot avant (2) et sa doublure interne (7) ainsi que la grille d'auvent (8) étant aptes à se déformer lors d'un choc piéton appliqué sur la partie arrière (2a) du capot avant (2) afin d'absorber le choc, la grille d'auvent (8) ayant sa partie avant (8a) disposée sous la doublure interne (7) du capot avant (2) et son bord avant (8b) en appui sur un élément rigide de carrosserie (10) du véhicule en un emplacement prédéterminé sous la doublure interne (7) du capot avant (2) relativement éloigné du bord arrière (2b) du capot avant (2) de façon que, lors d'une première phase d'absorption du choc piéton, la partie arrière (2a) du capot (2) se déforme pour provoquer l'écrasement de la doublure interne (7) sur la partie avant (8a) de la grille d'auvent (8) et en ce que la grille d'auvent (8), lors d'une seconde phase d'absorption du choc piéton, a sa partie avant (8a) apte à se déformer par enfoncement vers le bas de façon limitée avec écrasement complet de la doublure interne (7) du capot avant (2), **caractérisée en ce que** la grille d'auvent (8) comporte à sa face interne opposée à la doublure interne (7) du capot avant (2) un moyen formant butée (12) disposé le long de la partie avant (8a) de la grille d'auvent (8) et apte à venir en appui sur une partie de l'élément rigide de carrosserie (10) du véhicule pour limiter la déformation de la partie avant (8a) de la grille d'auvent (8).

2. Partie avant selon la revendication 1, **caractérisée en ce que** le moyen formant butée est constitué de plusieurs nervures (12) verticales parallèles à la direction longitudinale du véhicule.

3. Partie avant selon l'une des revendications précédentes, **caractérisée en ce que** le bord avant (8b) de la grille d'auvent (8) est en appui sur l'élément de carrosserie (10) par plusieurs nervures verticales (11) transversales à l'axe longitudinal du véhicule et solidaires de la grille d'auvent (8) le long de son bord avant (8b).

4. Partie avant selon l'une des revendications précédentes, **caractérisée en ce que** la partie avant (8a) la grille d'auvent (8) comporte une paroi (8c) inclinée de bas en haut en partant de son bord avant (8b) et la doublure interne (7) du capot avant (2) comporte une paroi inclinée (7a) située en regard de la paroi inclinée (8c) de la grille d'auvent (8) sensiblement parallèlement à celle-ci lorsque le capot avant (2) est en position fermée, les deux parois inclinées (7a,8c) venant en appui l'une sur l'autre lors du choc piéton.

5. Partie avant selon la revendication 4, **caractérisée en ce que** l'angle d'inclinaison de la paroi (8a) de la grille d'auvent (8) est compris entre environ 30° et environ 45°.

6. Partie avant selon l'une des revendications précédentes, **caractérisée en ce que** l'élément rigide de carrosserie est une paroi (10) du collecteur d'auvent (9).

7. Partie avant selon l'une des revendications précédentes, **caractérisée en ce que** la partie arrière de la grille d'auvent (8) comporte une paroi (8d) inclinée vers le bas fixée au bord inférieur du pare-brise (4) et raccordée à la partie avant (8c) de la grille d'auvent (8) par une paroi (8e) inclinée vers le haut.

8. Partie avant selon l'une des revendications 2 à 7, **caractérisée en ce que** les nervures (11,12) de limitation et d'appui viennent de matière avec la grille d'auvent (8).

9. Partie avant selon la revendication 8, **caractérisée en ce que** la grille d'auvent (8) est en une matière plastique.

10. Véhicule automobile, **caractérisé en ce qu'**il comprend une partie avant (1) telle que définie dans l'une quelconque des revendications précédentes.

## Patentansprüche

1. Frontpartie (1) eines Fahrzeugs, wie beispielsweise eines Kraftfahrzeugs, umfassend eine Fronthaube (2) mit Innenauskleidung (7), die zwischen der vorderen Stoßstange (3) und der Windschutzscheibe (4) des Fahrzeugs montiert ist, und ein quer verlaufendes Windlaufgitter (8), das zwischen der Windschutzscheibe (4) und der Fronthaube (2) montiert ist, und einen vorderen Teil (8a) aufweist, der unter einem hinteren Teil (2a) der Fronthaube (2) angeordnet ist, wenn sich letztere in der geschlossenen Stellung befindet, wobei die Fronthaube (2) und ihre Innenauskleidung (7), sowie das Windlaufgitter (8) in der Lage sind, sich bei einem Aufprall eines Fußgängers, der auf den hinteren Teil (2a) der Fronthaube (2) ausgeübt wird, zu verformen, um den Aufprall zu absorbieren, wobei der vordere Teil (8a) des Windlaufgitters (8) unter der Innenauskleidung (7) der Fronthaube (2) angeordnet ist, und sein vorderer Rand (8b) auf einem starren Karosserieelement (10) des Fahrzeugs, an einer vorbestimmten Stelle unter der Innenauskleidung (7) der Fronthaube (2) aufliegt, die relativ entfernt vom hinteren Rand (2b) der Fronthaube (2) liegt, sodass sich der hintere Teil (2a) der Fronthaube (2) in einer ersten Absorptionsphase des Fußgängeraufpralls verformt, um die Quetschung der Innenauskleidung (7) auf dem vorderen Teil (8a) des Windlaufgitters (8) hervorzurufen, und der vordere Teil (8a) des Windlaufgitters (8) in einer zweiten Absorptionsphase des Fußgängeraufpralls in der Lage ist, sich durch Eindrücken nach unten in begrenzter Form mit der vollständigen Quetschung der Innenauskleidung (7) der Fronthaube (2) zu verformen, **dadurch gekennzeichnet, dass** das Windlaufgitter (8) an seiner der Innenauskleidung (7) der Fronthaube (2) gegenüber liegenden Innenfläche eine Vorrichtung enthält, die einen Anschlag (12) bildet, und die entlang des vorderen Teils (8a) des Windlaufgitters (8) angeordnet, und in der Lage ist, auf einem Teil des starren Karosserieelements (10) des Fahrzeugs zur Anlage zu kommen, um die Verformung des vorderen Teils (8a) des Windlaufgitters (8) zu beschränken.

2. Frontpartie nach Anspruch 1, **dadurch gekennzeichnet, dass** die Vorrichtung, die einen Anschlag bildet, aus mehreren vertikalen Rippen (12) gebildet wird, die parallel zur Längsrichtung des Fahrzeugs verlaufen.

3. Frontpartie nach einem der vorherigen Ansprüche, **dadurch gekennzeichnet, dass** der vordere Rand (8b) des Windlaufgitters (8) an mehreren vertikalen Rippen (11) auf dem Karosserieelement (10) zur Anlage kommt, die quer zur Längsachse des Fahrzeugs verlaufen, und entlang seines vorderen Randes (8b) fest mit dem Windlaufgitter (8) verbunden sind.

4. Frontpartie nach einem der vorherigen Ansprüche, **dadurch gekennzeichnet, dass** der vordere Teil (8a) des Windlaufgitters (8) eine Wandung (8c) umfasst, die von unten nach oben geneigt ist, und von ihrem vorderen Rand (8b) ausgeht, und die Innenauskleidung (7) der Fronthaube (2) eine geneigte Wandung (7a) umfasst, die sich gegenüber der geneigten Wandung (8c) des Windlaufgitters (8) befindet und in etwa parallel zu dieser verläuft, wenn sich die Fronthaube (2) in der geschlossenen Stellung befindet, wobei die beiden geneigten Wandungen (7a, 8c) bei einem Fußgängeraufprall aufeinander zur Auflage kommen.

5. Frontpartie nach Anspruch 4, **dadurch gekennzeichnet, dass** der Neigungswinkel der Wandung (8a) des Windlaufgitters (8) zwischen etwa 30° und etwa 45° liegt.

6. Frontpartie nach einem der vorherigen Ansprüche, **dadurch gekennzeichnet, dass** das starre Karosserieelement eine Wandung (10) des Luftkastens (9) ist.

7. Frontpartie nach einem der vorherigen Ansprüche, **dadurch gekennzeichnet, dass** der hintere Teil des Windlaufgitters (8) eine nach unten geneigte Wandung (8d) umfasst, die am unteren Rand der Windschutzscheibe (4) befestigt ist, und durch eine nach oben geneigte Wandung (8e) am vorderen Teil (8c) des Windlaufgitters (8) angeschlossen ist.

8. Frontpartie nach einem der Ansprüche 2 bis 7, **dadurch gekennzeichnet, dass** die Rippen (11, 12) zur Beschränkung und zur Auflage im Windlaufgitter (8) untergebracht sind.

9. Frontpartie nach Anspruch 8, **dadurch gekennzeichnet, dass** das Windlaufgitter (8) aus einem Kunststoffmaterial gefertigt ist.

10. Kraftfahrzeug, **dadurch gekennzeichnet, dass** es eine Frontpartie (1) umfasst, wie sie in irgendeinem der vorherigen Ansprüche definiert wird.

## Claims

1. Front portion (1) of a vehicle, such as a motor vehicle, having a front hood (2) with an inner lining (7) mounted between the front bumper (3) and the windshield (4) of the vehicle and a transverse cowl grille (8) mounted between the windshield (4) and the front hood (2) having a front portion (8a) arranged under a rear portion (2a) of the front hood (2) when the latter is in the closed position, the front hood (2) and its inner lining (7) as well as the cowl grille (8) being capable of being deformed upon an impact with a pedestrian at the rear portion (2a) of the front hood (2) in order to absorb the shock, the cowl grille (8) having its front portion (8a) arranged under the inner lining (7) of the front hood (2) and its front edge (8b) bearing on a rigid body element (10) of the vehicle in a predetermined location under the inner lining (7) of the front hood (2) relatively distant from the rear edge (2b) of the front hood (2) so that, in a first phase of absorption of the impact with the pedestrian, the rear portion (2a) of the hood (2) is deformed so as to cause the inner lining (7) to be crushed on the front portion (8a) of the cowl grille (8) and in that the cowl grille (8), in a second phase of absorption of the impact with the pedestrian, has a front portion (8a) capable of being deformed by being pushed downward in a limited manner with complete crushing of the inner lining (7) of the front hood (2), **characterized in that** the cowl grille (8) comprises, at its inner face opposite the inner lining (7) of the front hood (2), means forming a stop (12) arranged along the front portion (8a) of the cowl grille (8) and capable of bearing on a portion of the rigid body element (10) of the vehicle in order to limit the deformation of the front portion (8a) of the cowl grille (8).

2. Front portion according to claim 1, **characterized in that** the means forming a stop consist of a plurality of vertical ribs (12) parallel to the longitudinal direction of the vehicle.

3. Front portion according to one of the previous claims, **characterized in that** the front edge (8b) of the cowl grille (8) bears on the body element (10) by a plurality of vertical ribs (11) transversal to the longitudinal axis of the vehicle and secured to the cowl grille (8) along its front edge (8b).

4. Front portion according to one of the previous claims, **characterized in that** the front portion (8a) of the cowl grille (8) comprises a wall (8c) sloping upward and away from its front edge (8b) and the inner lining (7) of the front hood (2) comprises an inclined wall (7a) located opposite the inclined wall (8c) of the cowl grille (8) substantially parallel thereto when the front hood (2) is in the closed position, the two inclined walls (7a, 8c) bearing on one another in the event of an impact with a pedestrian.

5. Front portion according to claim 4, **characterized in that** the angle of inclination of the wall (8a) of the cowl grille (8) is between around 30° and 45°.

6. Front portion according to one of the previous claims, **characterized in that** the rigid body element is a wall (10) of the cowl manifold (9).

7. Front portion according to one of the previous claims, **characterized in that** the rear portion of the cowl grille (8) comprises a wall (8d) sloping downward attached to the lower edge of the windshield (4) and connected to the front portion (8c) of the cowl grille (8) by a wall (8e) sloping upward.

8. Front portion according to one of claims 2 to 7, **characterized in that** the limiting and bearing ribs (11, 12) are integral with the cowl grille (8).

9. Front portion according to claim 8, **characterized in that** the cowl grille (8) is made of a plastic material.

10. Motor vehicle, **characterized in that** it includes a front portion (1) such as defined in any one of the previous claims.
